# EUROPÄISCHE PATENTSCHRIFT

(11) **EP 4 285 091 B1**
(45) Veröffentlichungstag und Bekanntmachung des Hinweises auf die Patenterteilung: **07.10.2026**
(21) Anmeldenummer: 22700370.4
(22) Anmeldetag: 10.01.2022
(51) Int. Cl.: G01M 11/02

(54) **VORRICHTUNG UND VERFAHREN ZUM MESSEN EINER OPTISCHEN EIGENSCHAFT EINES OPTISCHEN SYSTEMS**
DEVICE AND METHOD FOR MEASURING AN OPTICAL PROPERTY OF AN OPTICAL SYSTEM
DISPOSITIF ET PROCÉDÉ DE MESURE D'UNE PROPRIÉTÉ OPTIQUE D'UN SYSTÈME OPTIQUE

(30) Priorität: 01.02.2021 DE 102021102246
(43) Veröffentlichungstag der Anmeldung: 06.12.2023
(73) Patentinhaber: Trioptics GmbH, 22880 Wedel (DE)
(72) Erfinder: LISKE, Gabriel, 22761 Hamburg (DE); SASSNING, Sven, 22763 Hamburg (DE); RUPRECHT, Aiko, 22880 Wedel (DE)
(74) Vertreter: Ostertag & Partner Patentanwälte mbB
(86) Internationale Anmeldenummer: PCT/EP2022/050313
(87) Internationale Veröffentlichungsnummer: WO 2022/161756

(56) Entgegenhaltungen:
- EP-A1- 3 410 091
- WO-A1-2017/201144
- DE-A1- 102006 059 823
- DE-A1- 102007 057 260
- US-A1- 2016 021 305

## Beschreibung

### HINTERGRUND DER ERFINDUNG

### 1. Gebiet der Erfindung

Die Erfindung betrifft eine Vorrichtung und ein Verfahren zum Messen der Modulationsübertragungsfunktion .

### 2. Stand der Technik

Im Stand der Technik bekannt sind Vorrichtungen zur Messung der MTF, bei denen in einer Brennebene des zu vermessenden optischen Systems ein Lichtmuster erzeugt wird, das z.B. aus einer Anordnung aus Strichkreuzen, Punkten oder Linienmustern bestehen kann. Zur Erzeugung des Lichtmusters kann beispielsweise ein Retikel verwendet werden, das von einer Lichtquelle beleuchtet wird und ein Muster aus Blendenöffnungen aufweist.

Auf der gegenüberliegenden Seite des optischen Systems sind mehrere voneinander unabhängige Kameras angeordnet, die jeweils ein Objektiv und einen Bildsensor aufweisen, der in einer Brennebene des Objektivs angeordnet ist. Die Kameras sind dabei so verteilt angeordnet, dass jede Kamera mit ihrem Bildsensor das Bild von genau einem Ausschnitt des Lichtmusters (typischerweise von genau einem Strichkreuz) erfasst. Auf diese Weise kann die Modulationsübertragungsfunktion an mehreren Feldpositionen unabhängig voneinander gemessen werden.

Infolge stetig steigender Anforderungen an die Abbildungseigenschaften von optischen Systemen ist es wünschenswert, die Modulationsübertragungsfunktion oder eine andere Abbildungseigenschaft des optischen Systems an möglichst vielen Feldpositionen zu messen. Da für jeden Ausschnitt aus dem Lichtmuster eine eigene Kamera erforderlich ist, die ein gewisses Bauvolumen beansprucht, wird es bei größeren Zahlen von Feldpositionen schwierig, eine entsprechende Zahl von Kameras so dicht anzuordnen, dass das Messlicht aus der gewünschten Richtung in die entsprechenden Kameras eintreten kann..

Aus der WO 2016/180525 A1 (entspricht US 2018/0136079 A) ist eine Vorrichtung zur Messung der MTF bekannt, bei der durch eine spezielle Strahlfaltung mehr Kameras angeordnet werden können, als dies bei der herkömmlichen Anordnung der Fall ist.

Auch damit lassen sich aber nicht für alle Feldpunkte die MTF messen. Dies ist insbesondere dann störend, wenn das zu vermessende optische System eine variable Brennweite hat und die MTF für unterschiedliche Brennweiten gemessen werden soll. Da bei einer Veränderung der Brennweite die einzelnen Bilder der Strichkreuze an anderen Orten entstehen, müssen die Kameras bei jeder Veränderung der Brennweite neu ausgerichtet werden. Dies ist zeitaufwendig und daher für die schnelle Messung von in großen Stückzahlen hergestellten optischen Systemen, z.B. maschinell gefertigte Optiken von Smartphone-Kameras, nicht wirtschaftlich.

Die WO 2017/201144 A1 offenbart eine Messanordnung zum Vermessen von Brillengläsern, bei der ein Muster über die zu vermessenden Gläser auf den Bildsensor eines Smartphones abgebildet wird.

Die US 2016/0021305 A1 offenbart ein Verfahren zum Vermessen eines optischen Systems, bei dem das optische System mit einer modulierten diffusen optischen Quelle beleuchtet wird.

Die DE 10 2006 059 823 A1 offenbart ein Verfahren und eine Vorrichtung mit einem Relayobjektiv und einem Messsensor zur Lastfall-Aberrationsvermessung eines optischen Systems, bei dem es sich insbesondere um ein Mikrolithographie-Projektionsobjektiv handeln kann.

Die DE 10 2007 057 260 A1 offenbart ein Verfahren zur Bestimmung der optischen Abbildungsqualität von Gleitsichtgläsern, bei dem ein Testobjekt abgebildet wird.

Die US 8 766 165 B1 betrifft eine Zentriermessvorrichtung zur Ausrichtung von Linsen eines optischen Systems, wobei zusätzlich eine Modulationsübertragungsfunktion im außeraxialen Bereich zur Restfehlerkorrektur gemessen wird.

Weitere Vorrichtungen zum Messen einer optischen Eigenschaft sind bekannt aus der TW M579270 U, TW M583048 U, TW M579270 U und CN 206638403 U.

### ZUSAMMENFASSUNG DER ERFINDUNG

Aufgabe der Erfindung ist es, eine Vorrichtung und ein Verfahren zum Messen der Modulationsübertragungsfunktion eines optischen Systems anzugeben, bei der sich die Messung an möglichst vielen unterschiedlichen Feldpunkten mit geringem apparativem Aufwand durchführen lässt.

Erfindungsgemäß wird diese Aufgabe gelöst durch eine Vorrichtung mit den Merkmalen des Anspruchs 1 gelöst.

Die Erfindung beruht auf der Überlegung, dass zumindest bei optischen Systemen mit langer Brennweite und entsprechend kleinem Sichtfeld (FOV, *Field Of View)* das gesamte Objekt und somit mehrere voneinander getrennte Strukturen gleichzeitig über das optische System und die Sammeloptik auf den Bildsensor abgebildet werden können. Die dazu erforderlichen großen und hoch aufgelösten Bildsensoren - idealerweise mit mehr als 10 Megapixeln - sind inzwischen zu vertretbaren Kosten verfügbar. Aufgrund des in der Regel größeren Lichtleitwerts ist auch die Sammeloptik aufwendiger als bei den bisher eingesetzten Kameraobjektiven. Da jedoch nur ein Bildsensor und eine Sammeloptik bereitgestellt und vorzugsweise axial zentriert angeordnet werden müssen, ist der konstruktive und fertigungstechnische Aufwand für die erfindungsgemäße Vorrichtung dennoch deutlich geringer als bei den herkömmlichen Vorrichtungen, bei denen eine Vielzahl von Kameras domartig über dem zu vermessenden optischen System angeordnet sind.

Bei dem Objekt kann es sich um ein beleuchtetes Retikel handeln, wie dies für sich gesehen im Stand der Technik bekannt ist. Bei den Strukturen handelt es sich üblicherweise um Linienmuster oder um einfache oder doppelte Fadenkreuze.

Besonders vorteilhaft ist es, wenn die Halterung im divergierenden Strahlengang angeordnet ist. Das zu vermessende optische System kann dann eine veränderbare Brennweite haben und insbesondere als Zoom-Objektiv ausgebildet sein. Während bei herkömmlichen Vorrichtungen die Bilder der Strukturen bei einer Veränderung der Brennweite des zu vermessenden optischen Systems im allgemeinen aus den Bildfeldern der einzelnen Kameras ganz oder teilweise herauswandern, können bei der erfindungsgemäßen Vorrichtung die Bilder bei einer Brennweitenänderung stets vollständig vom Bildsensor erfasst werden. Bei einer Veränderung der Brennweite des optischen Systems müssten somit keinerlei Anpassungen oder Justierungen vorgenommen werden. Dadurch kann die Vorrichtung auch zur Überprüfung der Abbildungseigenschaften im Rahmen der Qualitätskontrolle von Zoom-Objektiven eingesetzt werden, die für die Verwendung in Geräten wie Smartphones oder Webcams vorgesehen sind.

Bei einem anderen Ausführungsbeispiel ist in dem Lichtweg zwischen dem Objekt und der Halterung ein Kollimator angeordnet. In diesem Fall befindet sich das zu vermessende optische System nicht in einem divergierenden, sondern in einem parallelen Strahlengang. Eine solche Anordnung ist dann vorteilhaft, wenn das zu vermessende optische System selbst keine Brechkraft hat und somit afokal ist. Beispiele für solche optischen Systeme sind beidseitig telezentrische Objektive, Prismen oder Wellenleiter. Bei der zu messenden optischen Eigenschaft kann es sich dann um eine photometrische Größe wie zum Beispiel eine winkelabhängige Leuchtdichte- oder Farbverteilung handeln.

Besonders günstig ist es, wenn der Kollimator ein konoskopisches Objektiv ist. Damit lässt sich in einer Ebene parallel zur Prüflingsoberfläche eine virtuelle Blende erzeugen. Diese Eigenschaft des Konoskops hat den Vorteil, dass keine physische Blende in den Strahlengang in der Nähe des Prüflings eingeführt werden muss.

Das Objekt kann entlang einer optischen Achse der Vorrichtung verfahrbar angeordnet sein, um den Abstand zwischen dem Kollimator und dem Objekt zu verändern. Ist das Objekt exakt in der Brennebene des Kollimators angeordnet, befindet sich das zu vermessende optische System im kollimierten Strahlengang. In allen anderen axialen Verfahrstellungen des Objekts ist der Strahlengang nur ungefähr kollimiert. Auf diese Weise kann man beispielsweise ermitteln, bei welchen optischen Verhältnissen das zu vermessende optische System die besten optischen Eigenschaften hat. Vorzugsweise sind das Objekt und der Kollimator zu diesem Zweck in einem gemeinsamen Gehäuse angeordnet.

Wenn der Kollimator zusätzlich eine veränderbare Brennweite hat, kann durch Verändern der Brennweite des Kollimators und des Abstands zum Objekt der Durchmesser des Bereichs verändern werden, der im optischen System ausgeleuchtet wird.

Das aus dem zu vermessenden optischen System austretende Messlicht muss nicht perfekt kollimiert (d.h. das Bild des Objekts liegt im Unendlichen) sein. Auch eine Abbildung in eine große Entfernung, z.B. in mehr als zwei Meter, lässt eine hochgenaue Messung der optischen Eigenschaft zu, ohne dass nennenswerte Abstriche bei der Messgenauigkeit gemacht werden müssen.

Sind die Abweichungen vom kollimierten Strahlengang nicht mehr tolerierbar, kann dem dadurch Rechnung getragen werden, dass der Bildsensor entlang der optischen Achse verfahren wird. Die gleiche Wirkung lässt sich erzielen, wenn die Sammeloptik eine variable Brennweite hat. Der Abstand a zwischen der Sammeloptik und dem Bildsensor kann daher um bis zu 10% von der Brennweite f der Sammeloptik abweichen, was zu der Bedingung 0.9·f ≤ a ≤ 1.1·f führt. Bei einigen Ausführungsbeispielen beträgt die Abweichung maximal 5%, bei anderen Ausführungsbeispielen wird keine Abweichung zugelassen.

Hinsichtlich des Verfahrens wird die eingangs gestellte Aufgabe durch ein Verfahren zum Messen der Modulationsübertragungsfunktion eines optischen Systems gelöst, das die im Anspruch 9 aufgeführten Merkmale hat.

Die oben im Zusammenhang mit der erfindungsgemäßen Vorrichtung erläuterten Überlegungen und Vorteile gelten für das Verfahren entsprechend.

Bei einem Ausführungsbeispiel hat das optische System eine veränderbare Brennweite. Die optischen Eigenschaften des optischen Systems werden für mindestens zwei unterschiedliche Brennweiten gemessen.

Bei einem anderen Ausführungsbeispiel ist das optische System afokal. In diesem Fall ist im Lichtweg zwischen dem Objekt und dem optischen System ein Kollimator angeordnet. Das Objekt kann dabei zwischen aufeinander folgenden Messungen des gleichen optischen Systems oder zwischen Messungen unterschiedlicher optischer Systeme entlang einer optischen Achse der Vorrichtung verfahren werden.

### KURZE BESCHREIBUNG DER ZEICHNUNGEN

Nachfolgend werden Ausführungsbeispiele anhand der Zeichnungen näher erläutert. In diesen zeigen:
- Figur 1: einen schematischen Meridionalschnitt durch eine Messvorrichtung gemäß dem Stand der Technik;
- Figur 2: einen schematischen Meridionalschnitt durch eine Messvorrichtung gemäß einem ersten Ausführungsbeispiel;
- Figur 3: eine Draufsicht auf das in dem Ausführungsbeispiel gemäß der Figur 2 als Objekt verwendete Retikel;
- Figur 4: die in der Figur 2 gezeigte Vorrichtung mit zusätzlich eingezeichneten Strahlen und einer Zuführeinrichtung für gleichartige zu vermessende optische Systeme;
- Figuren 5a und 5b: Meridionalschnitte durch die in der Figur 2 gezeigte Vorrichtung bei der Vermessung eines Zoom-Objektivs in unterschiedlichen Verfahrstellungen des Zoom-Objektivs;
- Figur 6: einen schematischen Meridionalschnitt durch eine Messvorrichtung gemäß einem zweiten Ausführungsbeispiel zur Vermessung eines afokalen optischen Systems;
- Figuren 7a und 7b: Meridionalschnitte durch eine Messvorrichtung gemäß einem dritten Ausführungsbeispiel, bei dem das Retikel axial verschiebbar angeordnet ist, in verschiedenen Verfahrstellungen des Retikels;
- Figuren 8a und 8b: Meridionalschnitte durch eine Variante der in den Figuren 7a und 7b gezeigten Messvorrichtung, bei dem der Kollimator zusätzlich eine veränderbare Brechkraft hat, in verschiedenen Verfahrstellungen;
- Figuren 9a und 9b: Meridionalschnitte durch eine Messvorrichtung gemäß einem vierten Ausführungsbeispiel, bei dem der Bildsensor axial verschiebbar angeordnet ist, in verschiedenen Verfahrstellung.

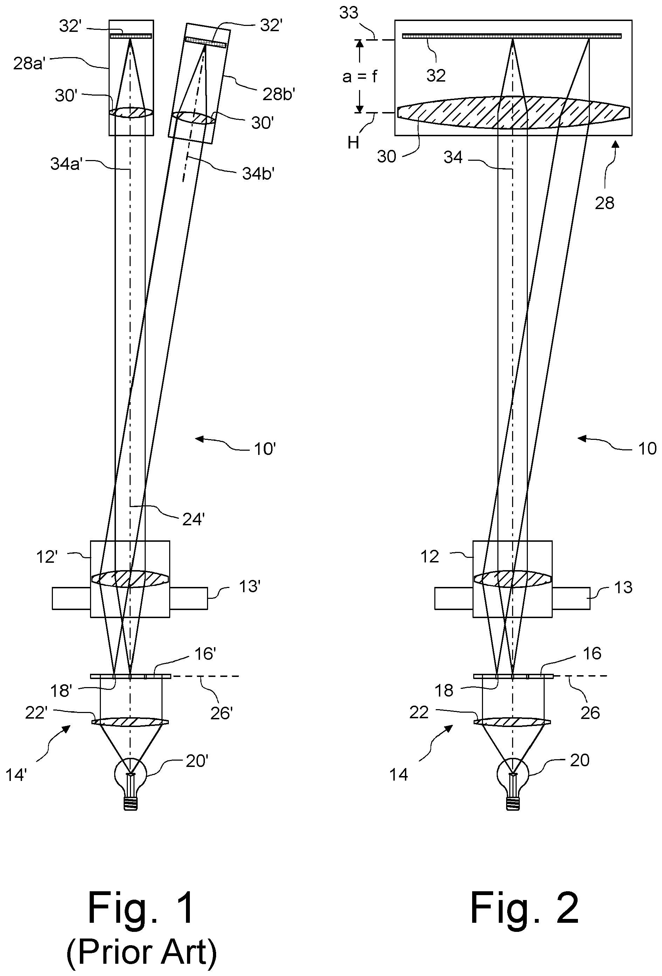

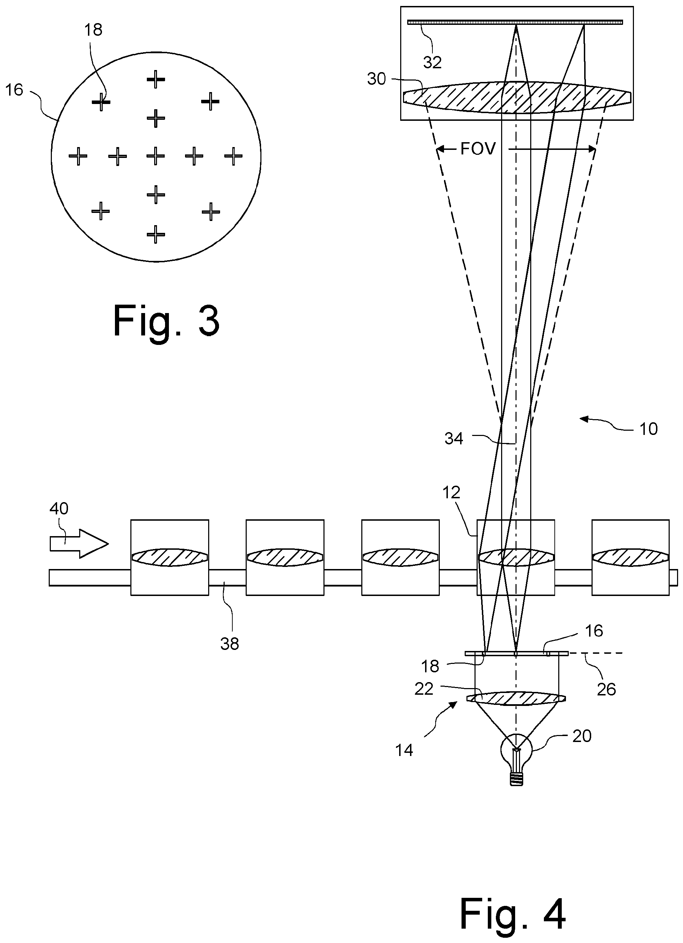

Von den gezeigten Ausführungsbeispielen ist das in der Figur 4 gezeigte Ausführungsbeispiel erfindungsgemäß und weist sämtliche Merkmale des Anspruchs 1 auf. Die übrigen Figuren, mit Ausnahme der Figur 1, zeigen Teilaspekte bzw. Varianten des in Figur 4 dargestellten Ausführungsbeispiels und sind in Kombination mit dieser ebenfalls erfindungsgemäß.

### BESCHREIBUNG BEVORZUGTER AUSFÜHRUNGSBEISPIELE

### 1. Stand der Technik

Zur Erläuterung der Funktionsweise der erfindungsgemäßen Messvorrichtung wird zunächst auf die Figur 1 Bezug genommen, in der eine Messvorrichtung gemäß dem Stand der Technik in einem schematischen Meridonalschnitt gezeigt und insgesamt mit 10' bezeichnet ist.

Die Messvorrichtung 10' ist dafür vorgesehen, die Modulationsübertragungsfunktion (MTF) eines im Folgenden als Prüfling 12' bezeichneten optischen Systems zu messen. Der Prüfling 12' ist hier nur als einzelne Linse angedeutet; häufig wird es sich um ein optisches System mit mehreren refraktiven und/oder reflektiven optischen Elementen handeln. Der Prüfling 12' wird von einer Halterung 13' gehalten. Die Halterung 13' kann eine Justiereinrichtung umfassen, mit welcher der Prüfling 12' axial zentriert und unverkippt im Strahlengang der Vorrichtung 10' positioniert werden kann.

Die Modulationsübertragungsfunktion stellt ein wichtiges Hilfsmittel dar, um die Abbildungsqualität von optischen Systemen quantitativ zu bewerten, und beschreibt die Auflösungsleistung eines optischen Systems durch das Verhältnis des relativen Bildkontrasts zum relativen Objektkontrast. Wenn ein Objekt von einem optischen System abgebildet wird, kommt es durch Abbildungsfehler und Beugungserscheinungen zwangsläufig zu einer Qualitätsverringerung in der Bildebene. Auch Fertigungsabweichungen sowie Montage- und Ausrichtungsfehler schwächen die Abbildungsleistung des Prüflings 12'.

Zur Messung Modulationsübertragungsfunktion bildet der Prüfling 12' ein Objekt ab; aus dem Bild des Objekts kann auf die Modulationsübertragungsfunktion des Prüflings 12' geschlossen werden. Das von dem Prüfling 12' abgebildete Objekt wird durch ein Lichtmuster gebildet, das von einer Lichtmustererzeugungseinrichtung 14' erzeugt wird. Die Lichtmustererzeugungseinrichtung 14' weist ein Retikel 16' auf, die von einer als Glühbirne dargestellten Lichtquelle 20' mit Hilfe eines Kondensors 22' gleichmäßig ausgeleuchtet wird.

Unter einem Retikel versteht man eine Glasscheibe, die auf einer Seite eine strukturierte Beschichtung trägt. Die Strukturierung kann z.B. durch einen fotolithographisch definierten Ätzprozess erzeugt werden. In der Figur 1 sind mehrere lichtdurchlässige Strukturen in der Beschichtung mit 18' bezeichnet.

Der Prüfling 12' wird so in der Messvorrichtung 10' angeordnet, dass seine optische Achse mit einer Referenzachse 24' der Messvorrichtung 10' fluchtet. Die Referenzachse 24' der Vorrichtung 10' fällt dabei mit der optischen Achse des Kondensors 22' zusammen. Außerdem wird der Prüfling 12' mit Hilfe der Halterung 13' axial so positioniert, dass das Retikel 16' in der Brennebene 26' des Prüflings 12' angeordnet ist. Dadurch wird das durch die Strukturen 18' definierte Lichtmuster vom Prüfling 12' ins Unendliche abgebildet.

Auf einer der Lichtmustererzeugungseinrichtung 14' gegenüberliegenden Seite des Prüflings 12' sind zwei identisch aufgebaute Kameras 28a', 28b' angeordnet. Die Kameras 28a', 28b' enthalten jeweils ein Objektiv 30' und einen ortsauflösenden Bildsensor 32', der sich in einer Brennebene des Objektivs 30' befindet. Auf dem Bildsensor 32' entsteht dadurch jeweils ein Ausschnitt aus dem von der Lichtmustererzeugungseinrichtung 14' erzeugten Lichtmuster. Der Ausschnitt wird dabei u. a. durch die Anordnung der Kameras 28a', 28b' bezüglich der Referenzachse 24' und durch das Sichtfeld der Kameras festgelegt. Die Kamera 28a', deren optische Achse 34a' mit der Referenzachse 24' fluchtet, erfasst ein Bild einer Struktur 18' in der Mitte des Retikels 16'. Die optische Achse 34b' der anderen Kamera 28b' ist geneigt zur Referenzachse 24' angeordnet. Dadurch erfasst die Kamera 28b' das Bild einer der äußeren Strukturen 18'.

Um die zentrale Kamera 28' herum sind üblicherweise noch weitere Kameras angeordnet, die in der Figur 1 aus Gründen der Übersicht nicht dargestellt sind. Diese weiteren Kameras erfassen die Bilder der anderen Strukturen 18'. Durch Auswertung der auf den Bildsensoren 32' der Kameras 28a', 28b' entstehenden Bilder der Strukturen 18' kann die Modulationsübertragungsfunktion des Prüflings 12' in an sich bekannter Weise bestimmt werden.

Vorteilhaft ist der in der Figur 1 gezeigte herkömmliche Aufbau vor allem dann, wenn die Brennweite des Prüflings klein und das Sichtfeld entsprechend groß ist. Es lassen sich dann Kameras so anordnen, dass sie Licht aufnehmen können, welches den Prüfling 12' unter sehr großen Winkeln relativ zur Referenzachse 24' verlässt.

Mit der in der Figur 1 dargestellten bekannten Messvorrichtung 10' lässt sich keine Aussage über die Modulationsübertragungsfunktion an Feldpunkten treffen, die nicht von dem Sichtfeld einer der Kameras 28a', 28b' erfasst werden. Häufig ist es jedoch wünschenswert, die Modulationsübertragungsfunktion an möglichst vielen unterschiedlichen Feldpositionen zu messen. Aus der Figur 1 wird deutlich, dass aufgrund des begrenzten Bauraums die Zahl der Kameras nicht beliebig erhöht werden kann.

### 2. Erstes Ausführungsbeispiel

Die Figur 2 zeigt in einer an die Figur 1 angelehnten Darstellung eine erfindungsgemäße und mit 10 bezeichnete Vorrichtung in einem meridionalen Schnitt.

Mit ungestrichenen Bezugsziffern X versehene Komponenten entsprechen Komponenten X' in der Figur 1 und werden nur dann nochmals erläutert, wenn erwähnenswerte Unterschiede vorhanden sind.

Die Vielzahl von Kameras 28a, 28b sind bei der erfindungsgemäßen Vorrichtung 10 ersetzt durch eine einzige Kamera 28, die ebenfalls eine Sammeloptik 30 aufweist. Im dargestellten Ausführungsbeispiel ist der Abstand a zwischen einer Sensorebene 33 und der Sammeloptik 30 (oder genauer gesagt deren bildseitige Hauptebene H) gleich der Brennweite f der Sammeloptik 30. Messlicht, das kollimiert auf die Sammeloptik 30 trifft, wird deswegen auf dem Bildsensor 32 fokussiert.

Die Abmessungen des Bildsensors 32 und der Sammeloptik 30 sind vorzugsweise so gewählt, dass vom Bildsensor 32 das gesamte Sichtfeld des Prüflings 12 erfasst wird. Dadurch können alle voneinander getrennte Strukturen 18 auf dem Retikel 16, das in der Figur 3 in einer Draufsicht gezeigt ist, gleichzeitig von dem Prüfling 12 und der Sammeloptik 30 auf den Bildsensor 32 abgebildet werden, soweit sich die Strukturen 18 im Sichtfeld des Prüflings befinden. Sollen beispielsweise bei einer anderen Messung weitere Feldpunkte an Positionen gemessen werden, die sich zwischen den Strukturen 18 befinden, so ist lediglich das Retikel 16 gegen ein anderes Retikel auszutauschen, dass an den gewünschten Feldpositionen Strukturen enthält. Auch die Verwendung von Strukturen, die sich über das gesamte Retikel erstrecken, ist grundsätzlich möglich.

In Figur 4 ist mit gestrichelten Linien das Sichtfeld FOV *(Field Of View)* des Prüflings 12 angedeutet. Das Sichtfeld eines abbildenden optischen Systems ist der Bereich im dreidimensionalen Gegenstandsraum, der scharf mit dem optischen System abgebildet werden kann. Bei den typischerweise vorhandenen rechteckigen Bildfeldern ist das Sichtfeld ein unendlicher Pyramidenstumpf, dessen Pyramidenspitze in der Eintrittspupille des Prüflings 12 liegt. Die Öffnungswinkel des Pyramidenstumpfes werden durch die Abmessungen des Bildfeldes und die Brennweite des Prüflings 12 bestimmt.

In der Figur 4 ist unterstellt, dass der Prüfling 12 in umgekehrter Lichtrichtung vermessen wird. Bei der späteren Verwendung durchtritt das Licht den Prüfling 12 in der Figur 4 gesehen von oben, weswegen das Sichtfeld FOV auf der Seite des Bildsensors 32 eingezeichnet ist. Dem Sichtfeld FOV entspricht auf der Bildseite der Bildraum, d.h. jedem Punkt im Sichtfeld entspricht ein Punkt im Bildraum.

Die Vorrichtung 10 zeichnet sich dadurch aus, dass das gesamte im Sichtfeld FOV oder im Bildraum liegende Retikel 16 gleichzeitig auf den Bildsensor 32 abgebildet wird. Die Sammeloptik 30 und der Bildsensor 32 sind also so ausgelegt, dass alle von dem Prüfling 12 abbildbaren Feldpunkte auch tatsächlich auf den Bildsensor 32 abgebildet werden. Auf diese Weise lässt sich z.B. eine Verzeichnung des Prüflings 12 sehr einfach und mit hoher Genauigkeit messen, da anders als bei herkömmlichen Vorrichtungen dieser Art keine Einzelbilder entstehen, sondern das gesamte Sichtfeld/Bildfeld erfasst wird. Typischerweise verwendet man für Messungen der Verzeichnung ein Retikel 16, dessen Strukturen 18 ein regelmäßiges Gitter bilden.

Es lässt sich auch sehr einfach die Größe des Sichtfeldes FOV messen, da der Bildsensor 32 normalerweise größer ist als das Bildfeld. Ferner lässt sich ein ggf. vorhandener Randlichtabfall mit der Vorrichtung 10 auf einfache Weise erfassen.

Mit 38 angedeutet ist in der Figur 4 eine Zuführeinrichtung, mit der eine Vielzahl gleichartiger Prüflinge 12 in einem automatisierten Qualitätssicherungsprozess der Vorrichtung 10 zugeführt und dort hinsichtlich ihrer optischen Eigenschaften vermessen werden können. Die Prüflinge werden entlang der mit einem Pfeil 40 angedeuteten Zuführrichtung schrittweise so gefördert, dass die Prüflinge 12 nacheinander im Strahlengang der Vorrichtung 10 positioniert werden.

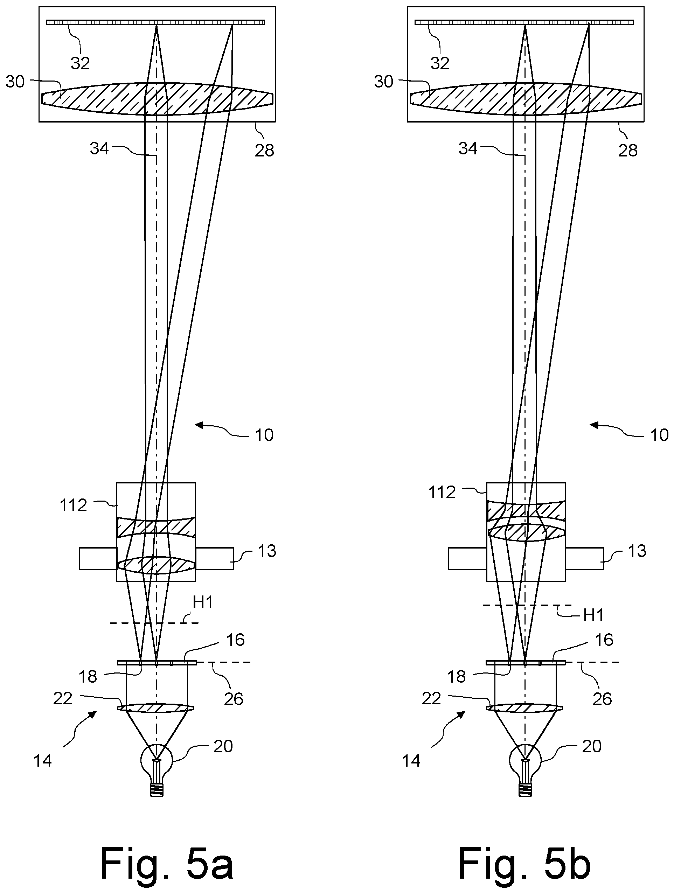

Die Figuren 5a und 5b zeigen Meridionalschnitte durch die in den Figur 2 und 4 gezeigte Vorrichtung 10 bei der Vermessung eines Zoom-Objektivs 112 in unterschiedlichen Zoom-Stellungen. Die Lage der objektseitigen Hauptebene H1 des Zoom-Objektivs 112 ist jeweils durch eine gestrichelte Linie angedeutet. Die Vorteile der erfindungsgemäßen Vorrichtung 10 sind bei der Vermessung des Zoom-Objektivs 112 besonders augenfällig.

Beim Verstellen des Zoom-Objekts 112 durch axiales Verschieben mehrerer Linsen bleiben die Bilder der Strukturen 18 nämlich nicht ortsfest, sondern wandern in radialer Richtung über die Bildebene. In den Figuren 5a und 5b ist dies an der Position des außeraxialen Bildpunktes auf dem Bildsensor 32 zu erkennen. Bei herkömmlichen Vorrichtungen dieser Art, wie sie in der Figur 1 gezeigt sind, würden die Bilder der Strukturen 18 aus dem Sichtfeld der einzelnen Kameras 28a, 28b herauswandern und könnten nicht mehr ausgewertet werden. Mit der erfindungsgemäßen Vorrichtung 10 hingegen können diese Bilder in allen Stellungen des Zoom-Objektivs 112, d.h. unabhängig vom Abbildungsmaßstab β, gleichzeitig erfasst und ausgewertet werden, ohne dass die Vorrichtung 10 verstellt werden muss.

### 3. Zweites Ausführungsbeispiel

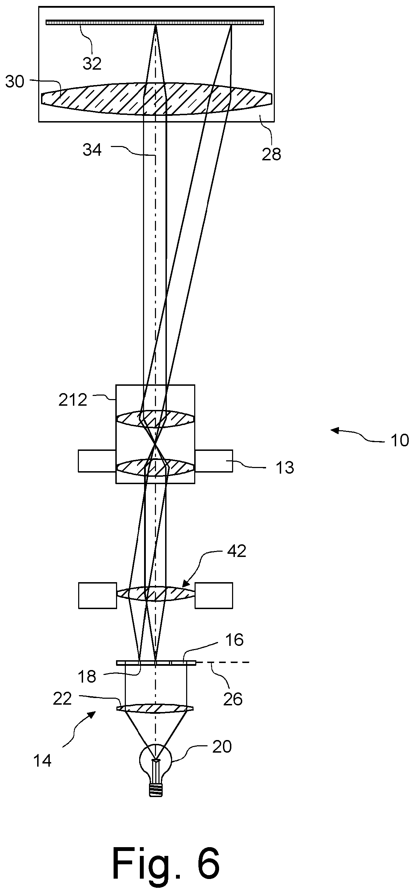

Die Figur 6 zeigt in einem Meridionalschnitt eine erfindungsgemäße Vorrichtung 210 gemäß einem zweiten Ausführungsbeispiel. Die Vorrichtung 210 ist dazu ausgelegt, optische Eigenschaften von Prüflingen 212 zu messen, die afokal sind. Im dargestellten Ausführungsbeispiel handelt es sich bei dem Prüfling 212 um ein beidseitig telezentrisches Objektiv. Afokal sind jedoch auch Prismen oder Wellenleiter, wie sie z.B. in AR- oder VR-Systemen eingesetzt werden.

Bei der Vorrichtung 210 ist zwischen dem Retikel 16 und der Halterung 13 für den Prüfling 212 ein Kollimator 42 angeordnet, in dessen Brennebene 226 sich das Retikel 16 befindet. Der Kollimator 42 bildet das Retikel 16 ins Unendliche ab, so dass der Prüfling 212 im kollimierten Strahlengang angeordnet ist. Ansonsten unterscheidet sich die Vorrichtung 210 nicht von der Vorrichtung 10 des ersten Ausführungsbeispiels.

Der Kollimator 42 kann als konoskopisches Objektiv ausgebildet sein. Damit kann optisch eine virtuelle Blende in der Prüflingsebene erzeugt werden, ohne dass eine physische Blende in den Strahlengang in der Nähe des Prüflings eingeführt werden muss.

### 4. Drittes Ausführungsbeispiel

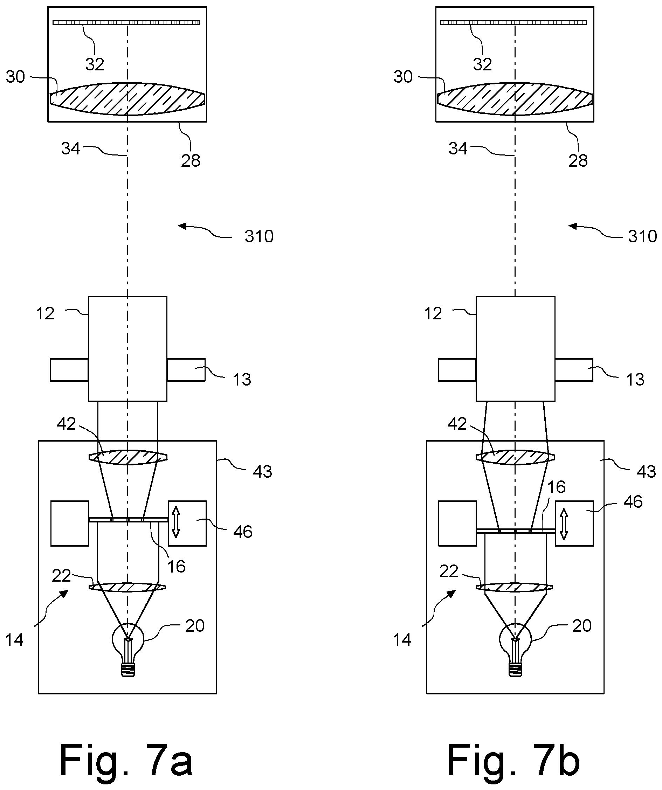

Die Figuren 7a und7b zeigen in Meridionalschnitten eine erfindungsgemäße Vorrichtung 310 gemäß einem dritten Ausführungsbeispiel. Die Vorrichtung 310 entspricht im Wesentlichen der in der Figur 6 gezeigten Vorrichtung 210. Der Kollimator 42 ist hier jedoch zusammen mit der Lichtmustererzeugungseinrichtung 14 in einem gemeinsamen Gehäuse 43 untergebracht. Außerdem ist das Retikel 16 der Lichtmustererzeugungseinrichtung 14 entlang der optischen Achse 34 mit Hilfe einer Verstelleinrichtung 46 verfahrbar. Befindet sich das Retikel 16 exakt in der Brennebene des Kollimators 42, wie dies die Figur 7a zeigt, so bildet der Kollimator 42 die Strukturen 18 auf dem Retikel 16 ins Unendliche ab, so dass der Prüfling 12 von kollimiertem Licht durchsetzt wird. Fährt man das Retikel 16 aus der Brennebene des Kollimators 42 heraus, so ist das Licht hinter dem Kollimator 42 nicht mehr kollimiert, sondern divergiert oder konvergiert. Die Figur 7b zeigt den Fall, dass sich der Prüfling 12 im konvergenten Strahlgengang befindet.

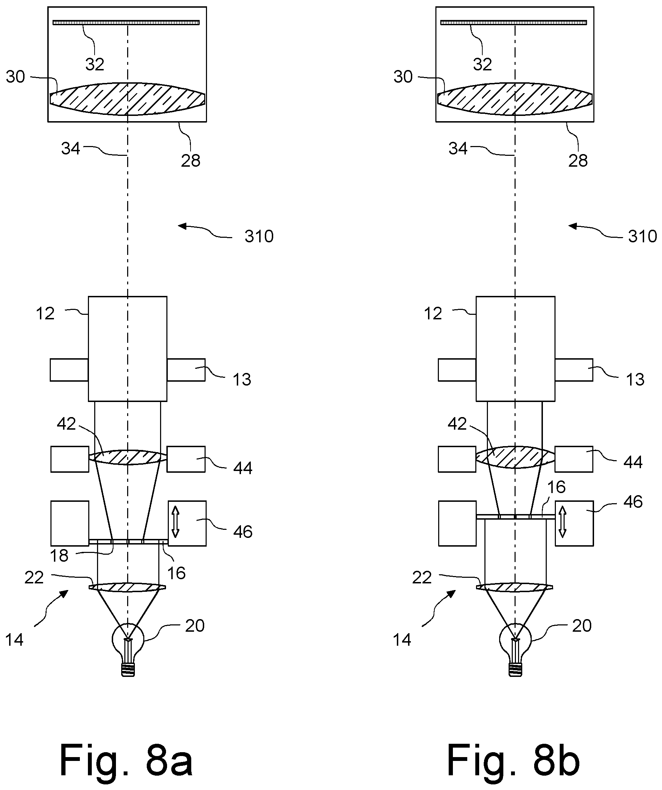

Wenn der Kollimator zusätzlich eine veränderbare Brennweite hat, was in den Figuren 8a und 8b durch eine Verstelleinrichtung 44 angedeutet ist, so können durch gleichzeitiges Verstellen des Kollimators 42 und Verfahren des Retikels 16 Strahlengänge eingestellt werden, die unterschiedliche Strahldurchmesser haben, wie dies ein Vergleich der Figuren 8a und 8b zeigt. Die Möglichkeit, ohne Lichtverlust die Größe des im Prüfling 12 ausgeleuchteten Bereichs einstellen zu können, ist bei bestimmten Messaufgaben, etwas bei der Messung photometrischer Größen, manchmal vorteilhaft.

### 5. Viertes Ausführungsbeispiel

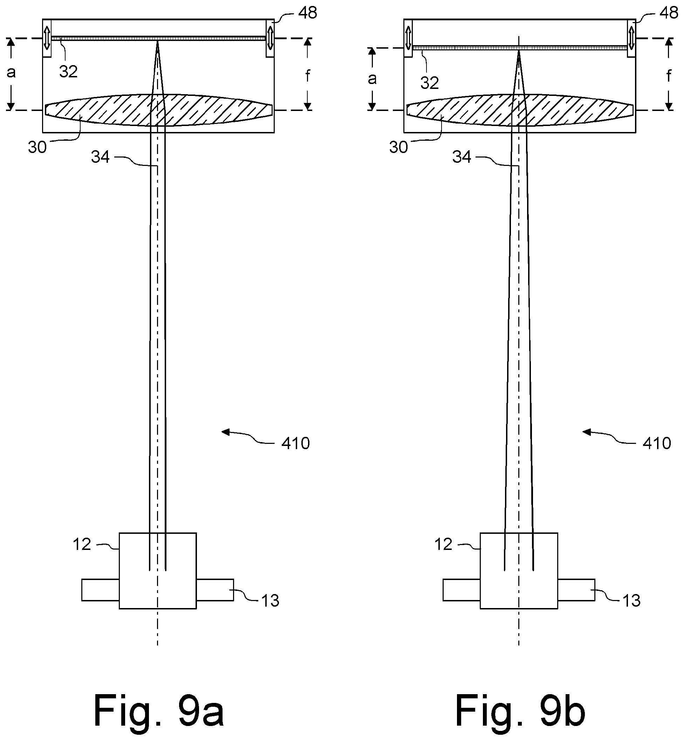

Die Figuren 9a und 9b zeigen Meridionalschnitte durch eine erfindungsgemäße Vorrichtung 410 gemäß einem vierten Ausführungsbeispiel. Bei diesem Ausführungsbeispiel ist der Bildsensor 32 entlang der optischen Achse 34 der Vorrichtung 410 mit Hilfe einer Verstelleinrichtung 48 verfahrbar. Dies ist vor allem dann vorteilhaft, wenn das vom Prüfling 12 ausgehende Messlicht nicht exakt kollimiert ist. Ursache hierfür kann z.B. sein, dass sich das Retikel 16 nicht genau in der Brennebene des Prüflings 12 befindet, oder dass bei den in den Figuren 6 bis 8 gezeigten Ausführungsbeispielen der Prüfling 12 nur näherungsweise afokal ist.

Die Figur 9a zeigt den Fall, dass das vom Prüfling 12 ausgehende Licht exakt kollimiert ist und der Abstand a zwischen der Sammeloptik 30 und dem Bildsensor 32 gleich der Brennweite f der Sammeloptik 30 ist. In der Figur 9b ist illustriert, wie durch eine Verringerung des Abstands a eine scharfe Abbildung erreicht werden kann, obwohl das vom Prüfling 12 ausgehende Licht leicht konvergiert. Im Allgemeinen weicht der Abstand a maximal 10% von der Brennweite f ab.

Mit der Vorrichtung 410 lässt sich zudem auf einfache Weise eine Bildfeldwölbung messen. Dazu können z.B. mehrere Bilder des Retikels 16 in unterschiedlichen axialen Verfahrstellungen des Bildsensors 32 aufgenommen und der Bildkontrast in Abhängigkeit vom Abstand a gemessen werden.

## Patentansprüche

1. Vorrichtung zum Messen der Modulationsübertragungsfunktion eines optischen Systems (12; 112; 212), mit:
einem abzubildenden Objekt (16), das mehrere in einer Ebene angeordnete und voneinander getrennte Strukturen (18) aufweist,
einem zweidimensionalen Bildsensor (32),
einer Sammeloptik (30) mit einer Brennweite f, wobei
der Bildsensor (32) einen Abstand a von der Sammeloptik (30) hat mit 0.9·f ≤ a ≤ 1.1·f, und wobei
der Bildsensor (30) und die Sammeloptik (30) so ausgelegt sind, dass alle Strukturen (18) von dem optischen System (12; 112; 212) und der Sammeloptik (30) gleichzeitig auf den Bildsensor (32) abbildbar sind,
einer Halterung (13) für das optische System (12; 112; 212), und mit
einer Auswerteeinheit, die dazu eingerichtet ist, aus einem auf dem Bildsensor (32) entstandenen Bild des Objekts (16) die Modulationsübertragungsfunktion zu bestimmen,
wobei
die Halterung als Zuführeinrichtung (38) ausgebildet ist, die dazu eingerichtet ist, eine Vielzahl gleichartiger optischer Systeme (12) in einem automatisierten Qualitätssicherungsprozess so schrittweise zu fördern, dass sich jeweils eines der Vielzahl optischer Systeme (12) im Strahlengang zwischen dem Objekt (16) und der Sammeloptik (30) befindet.

2. Vorrichtung nach Anspruch 1, **dadurch gekennzeichnet, dass** das Objekt ein durchleuchtetes Retikel (16) ist.

3. Vorrichtung nach Anspruch 1 oder 2, **dadurch gekennzeichnet, dass** die Strukturen (18) Fadenkreuze sind.

4. Vorrichtung nach einem der vorhergehenden Ansprüche, **dadurch gekennzeichnet, dass** die Halterung (13) im divergierenden Strahlengang angeordnet ist.

5. Vorrichtung nach einem der Ansprüche 1 bis 3, **dadurch gekennzeichnet, dass** im Lichtweg zwischen dem Objekt (16) und der Halterung (13) ein Kollimator (42) angeordnet ist.

6. Vorrichtung nach Anspruch 5, **dadurch gekennzeichnet, dass** der Kollimator (42) ein konoskopisches Objektiv ist.

7. Vorrichtung nach Anspruch 5 oder 6, **dadurch gekennzeichnet, dass** das Objekt (16) entlang einer optischen Achse (34) der Vorrichtung (310) verfahrbar ist, um den Abstand zwischen dem Kollimator (42) und dem Objekt (16) zu verändern.

8. Vorrichtung nach einem der vorhergehenden Ansprüche, **dadurch gekennzeichnet, dass** der Bildsensor (32) entlang einer optischen Achse (34) der Vorrichtung verfahrbar ist.

9. Verfahren zum Messen der Modulationsübertragungsfunktion eines optischen Systems (12; 112; 212), mit folgenden Schritten:
Bereitstellen eines zweidimensionalen Bildsensors (32), einer Sammeloptik (30) mit einer Brennweite f, wobei der Bildsensor (32) einen Abstand a von der Sammeloptik (30) hat mit 0.9·f ≤ a ≤ 1.1·f, und eines Objekts (16);
Einführen des zu vermessenden optischen Systems (12; 112; 212) in den Strahlengang zwischen dem Objekt (16) und der Sammeloptik (30), wobei eine Zuführeinrichtung (38) eine Vielzahl gleichartiger optischer Systeme (12) in einem automatisierten Qualitätssicherungsprozess so schrittweise fördert, dass sich jeweils eines der Vielzahl optischer Systeme (12) im Strahlengang zwischen dem Objekt (16) und der Sammeloptik (30) befindet,
Gleichzeitiges Abbilden des Objekts (16) innerhalb des Sichtfelds (FOV) des Prüflings (12; 112; 212) und der Sammeloptik (30) auf den Bildsensor (32) mit Hilfe des optisches Systems (12; 112; 212) und der Sammeloptik (30);
Auswerten eines auf dem Bildsensor (32) entstandenen Bildes des Objekts (16) zur Bestimmung der Modulationsübertragungsfunktion.

10. Verfahren nach Anspruch 9, **dadurch gekennzeichnet, dass** das optische System (212) eine veränderbare Brennweite hat, und dass die Modulationsübertragungsfunktion des optischen Systems (212) für mindestens zwei unterschiedliche Brennweiten gemessen werden.

11. Verfahren nach Anspruch 9, **dadurch gekennzeichnet, dass** das optische System (312) afokal ist, und dass im Lichtweg zwischen dem Objekt (16) und dem optischen System (312) ein Kollimator (42) angeordnet ist.

## Claims

1. A device for measuring the modulation transfer function of an optical system (12; 112; 212), comprising:
an object (16) to be imaged, the object having a plurality of mutually separate structures (18) arranged in a plane;
a two-dimensional image sensor (30);
a collecting optical unit (30) having a focal length f, wherein
the image sensor (32) is spaced apart from the collecting optical unit (30) by a distance a satisfying 0.9·f ≤ a ≤ 1.1·f, and wherein
the image sensor (32) and the collecting optical unit (30) are configured such that all of the structures (18) can be imaged simultaneously onto the image sensor (32) by the optical system (12; 112; 212) and the collecting optical unit (30);
a mounting (13) for the optical system (12; 112; 212); and
an evaluation unit configured to determine the modulation transfer function from an image of the object (16) formed on the image sensor (32),
wherein
the mounting is configured as a feed device (38) configured to convey a plurality of optical systems (12) of the same type stepwise in an automated quality-assurance process such that, at any given time, one of the plurality of optical systems (12) is located in the beam path between the object (16) and the collecting optical unit (30).

2. The device according to claim 1, wherein the object is a transilluminated reticle (16).

3. The device according to claim 1 or 2, wherein the structures (18) are crosshairs.

4. The device according to any one of the preceding claims, wherein the mounting (13) is arranged in the divergent beam path.

5. The device according to any one of claims 1 to 3, wherein a collimator (42) is arranged in the light path between the object (16) and the mounting (13).

6. The device according to claim 5, wherein the collimator (42) is a conoscopic objective lens.

7. The device according to claim 5 or 6, wherein the object (16) is movable along an optical axis (34) of the device (310) so as to vary the distance between the collimator (42) and the object (16).

8. The device according to any one of the preceding claims, wherein the image sensor (32) is movable along an optical axis (34) of the device.

9. A method for measuring the modulation transfer function of an optical system (12; 112; 212), comprising the following steps:
providing a two-dimensional image sensor (32), a collecting optical unit (30) having a focal length f, wherein the image sensor (32) is spaced apart from the collecting optical unit (30) by a distance a satisfying 0.9·f ≤ a ≤ 1.1·f, and an object (16);
introducing the optical system (12; 112; 212) to be measured into the beam path between the object (16) and the collecting optical unit (30), wherein a feed device (38) conveys a plurality of optical systems (12) of the same type stepwise in an automated quality-assurance process such that, at any given time, one of the plurality of optical systems (12) is located in the beam path between the object (16) and the collecting optical unit (30);
simultaneously imaging the object (16), within the field of view (FOV) of the device under test (12; 112; 212) and of the collecting optical unit (30), onto the image sensor (32) by means of the optical system (12; 112; 212) and the collecting optical unit (30); and
evaluating an image of the object (16) formed on the image sensor (32) in order to determine the modulation transfer function.

10. The method according to claim 9, wherein the optical system (212) has a variable focal length, and wherein the modulation transfer function of the optical system (212) is measured for at least two different focal lengths.

11. The method according to claim 9, wherein the optical system (312) is afocal, and wherein a collimator (42) is arranged in the light path between the object (16) and the optical system (312).

## Revendications

1. Dispositif de mesure de la fonction de transmission de modulation d'un système optique (12 ; 112 ; 212), avec :
un objet à représenter (16) qui présente plusieurs structures (18) disposées dans un plan et séparées l'une de l'autre,
un capteur d'image bidimensionnelle (32),
une optique collectrice (30) avec une distance focale f, dans lequel
le capteur d'image (32) a un écart a de l'optique collectrice (30) avec 0,9·f ≤ a ≤ 1,1·f, et dans lequel
le capteur d'image (30) et l'optique collectrice (30) sont conçus de sorte que toutes les structures (18) peuvent être représentées simultanément sur le capteur d'image (32) par le système optique (12 ; 112 ; 212) et l'optique collectrice (30), une fixation (13) pour le système optique (12 ; 112 ; 212), et avec
un module d'évaluation qui est configuré pour déterminer la fonction de transmission de modulation à partir d'une image de l'objet (16) apparue sur le capteur d'image (32),
dans lequel
la fixation est réalisée en tant qu'installation d'amenée (38) qui est configurée pour transporter progressivement une pluralité de systèmes optiques similaires (12) dans un processus d'assurance qualité automatisé de sorte qu'un de la pluralité de systèmes optiques (12) se trouve à chaque fois dans la trajectoire du faisceau entre l'objet (16) et l'optique collectrice (30).

2. Dispositif selon la revendication 1, **caractérisé en ce que** l'objet est un réticule transilluminé (16).

3. Dispositif selon la revendication 1 ou 2, **caractérisé en ce que** les structures (18) sont des croisées de fils.

4. Dispositif selon une des revendications précédentes, **caractérisé en ce que** la fixation (13) est disposée dans la trajectoire du faisceau divergente.

5. Dispositif selon une des revendications 1 à 3, **caractérisé en ce qu'**un collimateur (42) est disposé dans le trajet lumineux entre l'objet (16) et la fixation (13).

6. Dispositif selon la revendication 5, **caractérisé en ce que** le collimateur (42) est un objectif conoscopique.

7. Dispositif selon la revendication 5 ou 6, **caractérisé en ce que** l'objet (16) peut être déplacé le long d'un axe optique (34) du dispositif (310) pour modifier l'écart entre le collimateur (42) et l'objet (16).

8. Dispositif selon une des revendications précédentes, **caractérisé en ce que** le capteur d'image (32) peut être déplacé le long d'un axe optique (34) du dispositif.

9. Procédé de mesure de la fonction de transmission de modulation d'un système optique (12 ; 112 ; 212), avec les étapes suivantes :
mise à disposition d'un capteur d'image bidimensionnelle (32), d'une optique collectrice (30) avec une distance focale f, dans lequel le capteur d'image (32) a un écart a de l'optique collectrice (30) avec 0,9·f ≤ a ≤ 1,1·f, et d'un objet (16) ; introduction du système optique à mesurer (12 ; 112 ; 212) dans la trajectoire du faisceau entre l'objet (16) et l'optique collectrice (30), dans lequel une installation d'amenée (38) transporte progressivement une pluralité de systèmes optiques similaires (12) dans un processus d'assurance qualité automatisé de sorte qu'un de la pluralité de systèmes optiques (12) se trouve à chaque fois dans la trajectoire du faisceau entre l'objet (16) et l'optique collectrice (30),
représentation simultanée de l'objet (16) au sein du champ de vision (FOV) de l'ébauche (12 ; 112 ; 212) et de l'optique collectrice (30) sur le capteur d'image (32) à l'aide du système optique (12 ; 112 ; 212) et de l'optique collectrice (30) ; évaluation d'une image de l'objet (16) apparue sur le capteur d'image (32) pour la détermination de la fonction de transmission de modulation.

10. Procédé selon la revendication 9, **caractérisé en ce que** le système optique (212) a une distance focale variable, et que la fonction de transmission de modulation du système optique (212) est mesurée pour au moins deux distances focales différentes.

11. Procédé selon la revendication 9, **caractérisé en ce que** le système optique (312) est afocal, et qu'un collimateur (42) est disposé dans le trajet lumineux entre l'objet (16) et le système optique (312).
